# EUROPEAN PATENT APPLICATION

(11) **EP 4 746 395 A1**
(43) Date of publication of application: **20.05.2026**
(21) Application number: 25211557.1
(22) Date of filing: 28.10.2025
(51) Int. Cl.: H04M 9/08

(54) **ACOUSTIC ECHO CANCELLATION USING A WIRELESS SPEAKER**

(30) Priority: 14.11.2024 US 202418947674
(71) Applicant: GOOGLE LLC, Mountain View CA 94043 (US)
(72) Inventor: SANDERS, Nicholas, Mountain View, 94043 (US); SHIH, Shao-Fu, Mountain View, 94043 (US); AHGREN, Per, Mountain View, 94043 (US)
(74) Representative: Marks & Clerk GST

(57) **Abstract**

In general the subject matter described in this disclosure can be embodied in methods, systems, and program products for performing acoustic echo cancellation. A near end device receives far-end audio from a far-end device, and wirelessly transmits, to a wireless speaker, the far-end audio and an indication of a time at which to output the far-end audio. The near-end device modifies the far-end audio received from the far-end device to generate a filtered version of the far-end audio, based on (i) a model of acoustic echo between the wireless speaker and the near-end device, and (ii) the indication of the time. The near-end device combines near-end audio captured by a microphone of the near-end device with the filtered version of the far-end audio, and transmits the resulting audio to the far-end device.

## Description

### TECHNICAL FIELD

This document generally relates to acoustic echo cancellation using a wireless speaker.

### BACKGROUND

In a telephone call or video conference conversation, a common technical difficulty is that sound played by a loudspeaker is captured by a microphone of the same device. If the captured audio is not processed to remove sound played by the loudspeaker, the captured audio that is transmitted to a far end of the conversation will include at least some of the sound played by the loudspeaker.

The loudspeaker in such a scenario plays audio that was originally captured by a microphone at the far end of the conversation, and sending audio to the far end of the conversation that returns audio that originated at far end of the conversation introduces "echo" into the conversation. Echo is a phenomenon in which a delayed and distorted version of an original sound is reflected back to the source.

### SUMMARY

This document describes methods, systems, mechanisms, and technologies for performing acoustic echo cancellation using a wireless speaker.

A telephone call or video conference conversation between participants may encounter echo when a near-end participant uses a wireless loudspeaker to play audio from the conversation. Acoustic echo cancellation technologies can remove loudspeaker audio from audio captured by a microphone, but these technologies encounter difficulties when the loudspeaker and microphone are not co-located in the same device. While some acoustic echo cancellation algorithms provide for signal-alignment, the signal alignment may only account for minor differences in timing. A quality of the echo cancellation process suffers when a delay between a near-end speaker device receiving audio and audibly rendering the audio is unknown and/or changes during a conversation.

As an example, if the delay between audio receipt and rendering is long, complexity and memory requirements of a delay estimation function increase. If the delay is long and unknown, an acoustic echo cancellation algorithm may function poorly. And if the delay is time varying, echo leakage and poor transparency can occur.

All such issues may be present when using a wireless loudspeaker in a system that implements acoustic echo cancellation, at least when the near-end microphone is not co-located in the wireless loudspeaker. An example such scenario is when a near-end telephone used in a conversation wirelessly transmits audio received from a far-side of the conversation to a near-end wireless speaker device for output (e.g., a Bluetooth speaker that is paired to the near-end telephone). The near-end speaker device may drop or add frames to match a data rate of the near-end user device, resulting in further variances in a delay between the near-end speaker device receiving audio and rendering the audio.

The time-varying nature of the delay can be exacerbated by clock drift. Even if the near-end user device estimates the delay and therefore a time at which the near-end speaker device will output audio, the time of audio output may drift over time due to the near-end user device and the near-end speaker device running different clocks. This drift may cause the acoustic echo cancellation alignment functionality to constantly re-align (e.g., and periodically "wrap" due to buffer under/overruns cause by the clock drift). As a result, acoustic echo cancellation transparency that relies on a wireless speaker may be 20-30 dB lower than in an ideal case.

This application describes technologies that enable a near-end user device (e.g., a user phone) that is involved in an audio conversation to set a time at which a near-end wireless speaker device will output audio. For example, the near-end user device may configure the near-end speaker device to store received audio until a set time. The set time may be computed as a pre-determined delay from a common reference time that is known to both the near-end user device and the near-end speaker device. The common reference time may remain consistent due to the near-end speaker device synchronizing its clock with that of the near-end user device.

The near-end user device may capture audio with a microphone of the near-end user device, with the captured audio including both locally-generated audio (e.g., speech by a user of the near-end device) and echoed far-end audio. The echoed far-end audio may be an echoed version of speech by a user of the far-end device.

The near end-user device may store data that models an echo path between the near-end speaker device and the near-end user device, and combine the model of the echo path with a copy of the far-end audio that is received from the far-end device, to generate a filtered version of the far-end audio. The filtered version of the far-end audio is stored by the near-end user device, and configured to replicate the echoed version of the far-end signal that is captured by the microphone of the near-end user device.

The near-end user device can use information that indicates a time at which the far-end speaker device output the far-end audio, to align the filtered version of the far-end signal with a corresponding portion of audio captured by the microphone of the near-end device. Once aligned, acoustic echo cancellation processes can subtract the filtered version of the far-end signal from the audio captured by the microphone of the near-end user device, producing a "clean" version of the captured audio in which the far-end audio echo is at least partially cancelled from the captured audio. The near-end user device can transmit this "clean" version of near-end audio to the far-end device for output to the other participant in the conversation.

The technology described in this application provides various advantages. For example, an ability of the near-end user device to know the time at which the near-end speaker device outputs the far-end audio assists with the alignment process of the acoustic echo cancellation algorithm and increases performance and transparency of the echo cancellation process. Moreover, acoustic echo cancellation algorithms can use smaller buffers and/or fewer computational resources to cancel echoes from conversations. Acoustic echo cancellation algorithms may be more robust, and able to accommodate time delays that are longer and/or time-varying.

An ability to use a wireless speaker rather than a speaker integrated into the near-end user device enables utilization of more powerful and better sounding near-end speakers. Further, using a wireless speaker during an audio conversation enables individuals that are listening to streamed audio (e.g., a podcast) to transition to a telephone call or videoconference conversation using the same wireless speaker, rather than switching to a speaker integrated into the near-end user device.

As additional description to the embodiments described below, the present disclosure describes the following embodiments.

Embodiment 1 is directed to a computer-implemented method for acoustic echo cancellation, comprising: receiving, by a near-end user device and from a far-end device, far-end audio; wirelessly transmitting, by the near-end user device and for receipt by a near-end speaker device that is physically separate from the near-end user device, the far-end audio for audible output by a speaker of the near-end speaker device; transmitting, by the near-end user device and for receipt by the near-end speaker device, an indication of a time at which the near-end speaker device is to audibly output the far-end audio; capturing, by a microphone of the near-end user device, near-end audio that includes near-end user speech and an echoed version of the far-end audio that was audibly output by the speaker of the near-end speaker device; modifying, by the near-end user device, the far-end audio to generate a filtered version of the far-end audio, using: (i) a model of an acoustic echo path between the near-end speaker device and the near-end user device; and (ii) the indication of the time at which the near-end speaker device is to audibly output the far-end audio; combining, by the near-end user device, the near-end audio captured by the microphone of the near-end user device with the filtered version of the far-end audio, to generate a filtered version of the near-end audio; and transmitting, by the near-end user device and for receipt by the far-end device, the filtered version of the near-end audio.

Embodiment 2 is directed to the computer-implemented method of embodiment 1, wherein: the indication of the time at which the near-end speaker device is to audibly output the far-end audio comprises an indication of a time delay.

Embodiment 3 is directed to the computer-implemented method of embodiment 2, wherein: the indication of the time delay comprises a delay that the near-end speaker device is to impose from (i) a common reference time recognized by each of the near-end user device and the near-end speaker device; and (ii) the time at which the near-end speaker device is to audibly output the far-end audio.

Embodiment 4 is directed to the computer-implemented method of embodiment 3, wherein: the indication of the time delay comprises (i) an indication of a first time delay from the common reference time to a synchronization time, and (ii) an indication of a second time delay from the synchronization time to the time at which the near-end speaker device is to audibly output the far-end audio.

Embodiment 5 is directed to the computer-implemented method of embodiment 4, comprising: receiving, by the near-end user device and from the near-end speaker device, an indication of a range of acceptable values for the second time delay from the synchronization time to the time at which the near-end speaker device is to audibly output the far-end audio; and determining, by the near-end user device, the second time delay from among the range of acceptable values for the second time delay.

Embodiment 6 is directed to the computer-implemented method of embodiment 3, wherein: the common reference time comprises a time at which the near-end user device begins wirelessly transmitting data that encodes the far-end audio.

Embodiment 7 is directed to the computer-implemented method of embodiment 6, wherein: the common reference time comprises an anchor point of a Bluetooth Low Energy communication session.

Embodiment 8 is directed to the computer-implemented method of any one of embodiments 1-7, wherein modifying the far-end audio to generate the filtered version of the far-end audio comprises: aligning the far-end audio with the model of the acoustic echo path between the near-end speaker device and the near-end user device, using the indication of the time at which the near-end speaker device is to audibly output the far-end audio.

Embodiment 9 is directed to the computer-implemented method of any one of embodiments 1-8, wherein combining the near-end audio with the filtered version of the far-end audio to generate the filtered version of the near-end audio comprises: aligning the filtered version of the far-end audio with the near-end audio captured by the microphone of the near-end user device.

Embodiment 10 is directed to the computer-implemented method of any one of embodiments 1-9, wherein the model of the acoustic echo path comprises an adaptive filter.

Embodiment 11 is directed to the computer-implemented method of any one of embodiments 1-10, wherein combining the near-end audio with the filtered version of the far-end audio to generate the filtered version of the near-end audio comprises: subtracting the filtered version of the far-end audio from the near-end audio.

Embodiment 12 is directed to the computer-implemented method of any one of embodiments 1-11, wherein the time at which the near-end speaker device is to audibly output the far-end audio comprises a starting time at which the near-end speaker device is to begin audibly outputting the far-end audio.

Embodiment 13 is directed to the computer-implemented method of any one of embodiments 1-12, wherein: the far-end audio that is received by the near-end user device comprises a digitally-encoded representation of the far-end audio; and the filtered version of the near-end audio that is transmitted for receipt by the far-end device comprises a digitally-encoded representation of the filtered version of the near-end audio.

Embodiment 14 is directed to the computer-implemented method of any one of embodiments 1-13, wherein the near-end user device transmits the indication of the time at which the near-end speaker device is to audibly output the far-end audio during a configuration process, before the near-end user device wirelessly transmitting the far-end audio for receipt by the near-end speaker device.

Embodiment 15 is directed to the computer-implemented method of any one of embodiments 1-14, wherein the far-end audio was captured by a microphone of the far-end device.

Embodiment 16 is directed to a near-end user device, comprising: one or more processing devices; and one or more computer-readable devices encoding instructions that, when executed by the one or more processing devices, causes the near-end user device to perform operations according to the method of any one of embodiments 1 through 15.

The details of one or more implementations are set forth in the accompanying drawings and the description below. Other features, objects, and advantages will be apparent from the description and drawings, and from the claims.

### DESCRIPTION OF DRAWINGS

FIG. 1 shows a diagram of devices engaged in an audio conversation and components used to remove acoustic echoes from the conversation.
FIG. 2 shows the echo canceller of FIG. 1 with additional detail.
FIGS. 3A-C show a swim-lane diagram of operations to remove acoustic echoes from the audio conversation.
FIG. 4 shows a diagram that indicates how a near-end user device and a near-end speaker device communicate and render audio.
FIG. 5 is a conceptual diagram of a system that may be used to implement the systems and methods described in this document.
FIG. 6 is a block diagram of computing devices that may be used to implement the systems and methods described in this document, as either a client or as a server or plurality of servers.

Like reference symbols in the various drawings indicate like elements.

### DETAILED DESCRIPTION

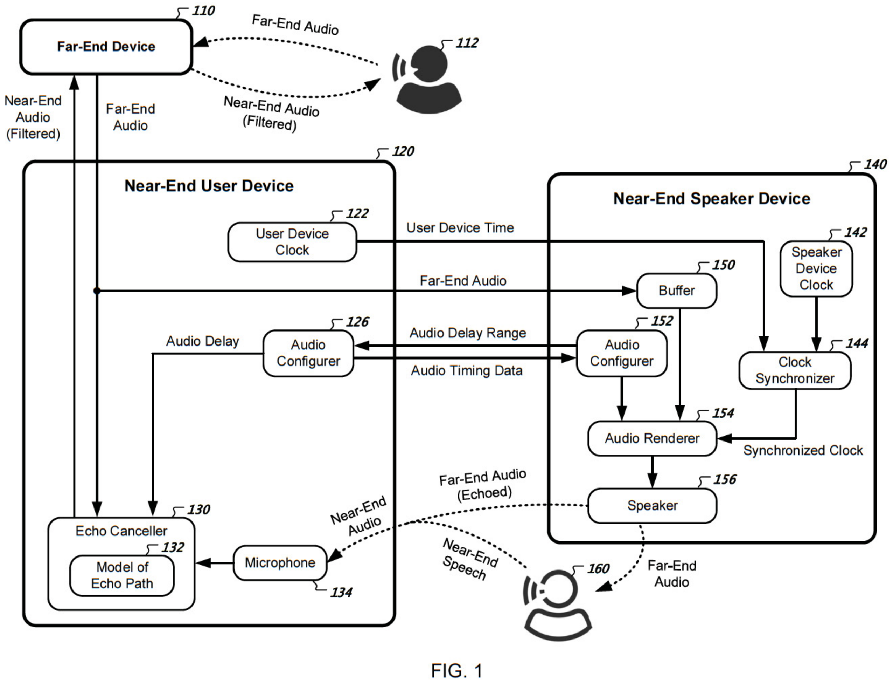

This document generally describes acoustic echo cancellation using a wireless speaker. The echo cancellation process utilizes knowledge of a rendering time at which the wireless speaker is configured to output audio, to align audio captured by a microphone of a near-end device that performs the echo cancellation with a model of an echo path between the wireless speaker and the near-end user device. The rendering time may be specified by the near-end user device in a configuration process between the near-end user device and the near-end speaker device. Details of the echo cancellation process are provided below with reference to FIGS. 1-4.

FIG. 1 shows a diagram of devices engaged in an audio conversation and components used to remove acoustic echoes from the conversation. The audio conversation includes a far-end participant 112 communicating with a near-end participant 160.

Audio spoken by the far-end participant 112 is captured by a microphone of a far-end device 110, as illustrated by the arrow that is directed from the far-end participant 112 to the far-end device 110. The far-end device 110 may be a phone or other communication device of the far-end participant 112, and may transfer the far-end audio to the near-end user device 120 over a network. For example, the far-end device 110 may digitally encode the far-end audio and wirelessly transmit the encoded audio to a nearby cellular tower for transmission over one or more communication networks to the near-end user device 120.

The near-end user device 120 may be a phone or other communication device of the near-end participant 160. Upon receipt of the far-end audio, the near-end user device 120 can: (i) store the far-end audio for use by the echo canceller 130; and (ii) wirelessly transmit a copy of the far-end audio for receipt by the near-end speaker device 140. For example, the near-end user device can store a digital version of the far-end audio that was extracted from data received from the far-end device 110 for use in the echo cancellation process, and transmit a digital representation of the far-end audio over Bluetooth for receipt and playback by a Bluetooth speaker.

The near-end speaker device 140 may stored the far-end audio received from the near-end user device 120 in a buffer 150. At a specified time, the audio renderer 154 may audibly render the far-end audio using a speaker 156. The specified time may be designated during a configuration process between an audio configurer 126 of the near-end user device 120 and an audio configurer 152 of the near-end speaker device 140.

The near-end speaker device 140 may include a clock synchronizer 144 that is adapted to synchronize a clock 142 of the near-end speaker device 140 with a clock 122 of the near-end user device 120, to produce a synchronized clock signal for use by the audio renderer 154. The audio renderer 154 may utilize the synchronized clock signal so that the near-end speaker device 140 outputs the audio at a time that the near-end user device 120 can accurately identify using its own clock 122.

The far-end audio that is output by the speaker 156 is heard by the near-end participant 160, as desired. The far-end audio may also bounce around a near-end environment and be captured by a microphone 134 of the near-end user device, mixed with any near-end speech that is spoken by the near-end participant 160. As an example, should the near-end participant 160 speak at the same time that the speaker 156 outputs the audio spoken by the far-end participant 112, the microphone 134 will capture audio that includes both participants speaking at the same time.

The near-end user device 120 may send the near-end audio captured by the microphone 134 to an echo canceller 130, which is configured to use a model 132 of the echo path to remove components of the captured near-end audio that represent an echoed version of the far-end audio. For example, the near-end user device may generate a digital version of the near-end audio captured by the microphone and provide the digital version of the near-end audio for use by the echo canceller 130.

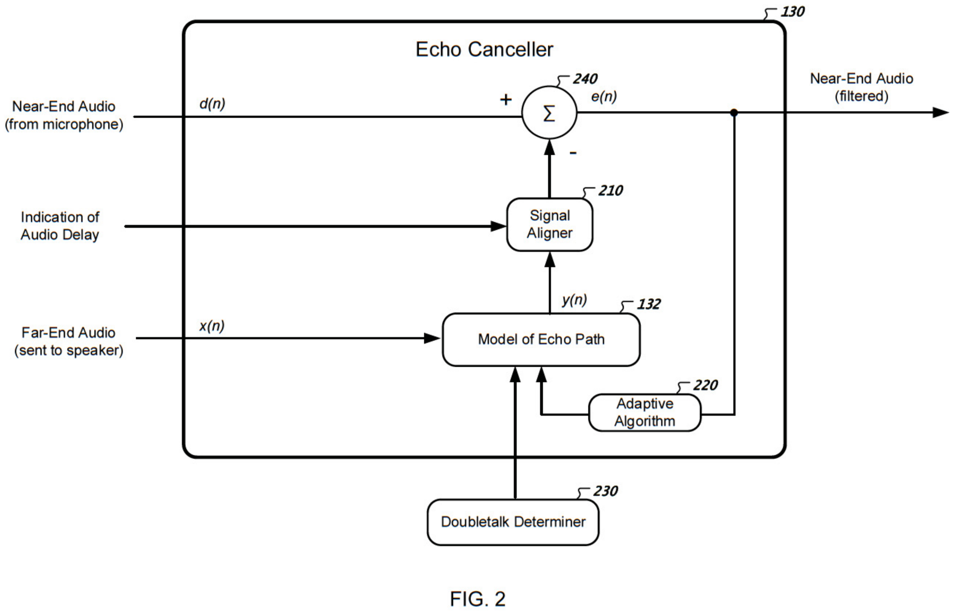

FIG. 2 shows the echo canceller 130 of FIG. 1 with additional detail. As shown in FIG. 1, the echo canceller 130 receives near-end audio that was captured by microphone 134 (labelled "d(n)" in FIG. 2) and generates therefrom a "clean" filtered version of the near-end audio (labelled "e(n)" in FIG. 2). To generate the filtered version of the near-end audio, the echo canceller 130 removes components of the near-end audio that are estimated to represent the echoed version of the far-end audio. The signal that includes the estimated representation of the echoed version of the far-end audio is designated "y(n)" in FIG. 2, and is generated by combining a stored version of the far-end audio (labelled "x(n)" in FIG. 2) with a model 132 of the echo path between the near-end speaker device 140 and the near-end user device 120.

The model 132 of the echo path may represent how sound changes as the sound travels from the speaker 156 of the near-end speaker device 140 to the microphone 134 of the near-end user device 120. The changes in sound as the sound travels this echo path can include changes in amplitude to various frequency components of the sound and introduction of delayed versions of the sound that represent delayed and/or reflected versions of the audio output from the speaker 156.

The model 132 of the echo path may be implemented as an adaptive filter that represents an impulse response of the near-end acoustic environment. The adaptive algorithm 220 may regularly update parameters of the adaptive filter to adapt to changes in the echo path, for example, which result from changes in a near-end environment and/or changes in position of the near-end user device 120 or near-end speaker device 140. The parameters of the adaptive filter that are updated may be filter coefficients and/or filter taps that influence how various components of an audio signal are adjusted in magnitude, frequency, and time.

The adaptive algorithm 220 may alter its parameters to minimize a function of a difference between the desired output "d(n)" and the output "y(n)" of the model 132 of the echo path, at least when the near-end participant 160 is not speaker. A doubletalk determiner 230 may analyze captured audio and indicate when the near-end participant 160 is speaking at a same time as audio is being output by the speaker 156. While the near-end participant 160 speaks at a same time that the speaker 156 is outputting audio, the near-end audio captured by the microphone 134 may be unsuitable for use by the adaptive algorithm 220 as a desired audio signal "d(n)".

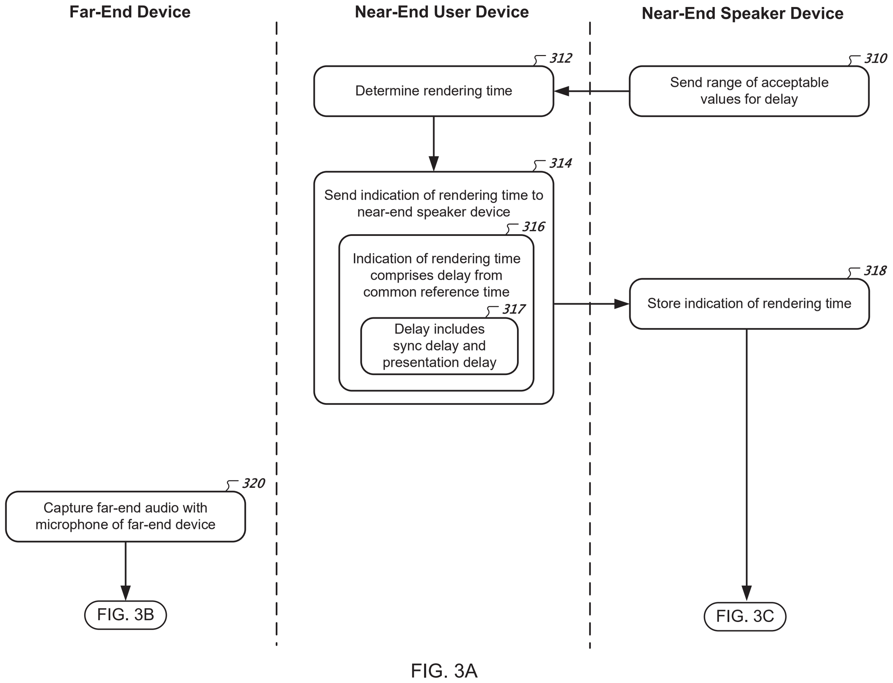

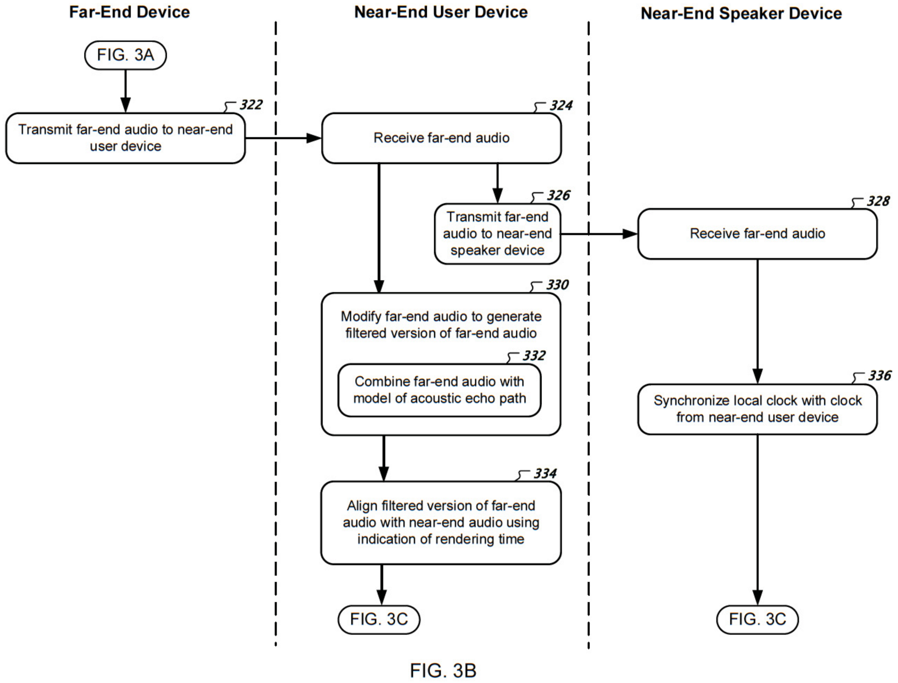

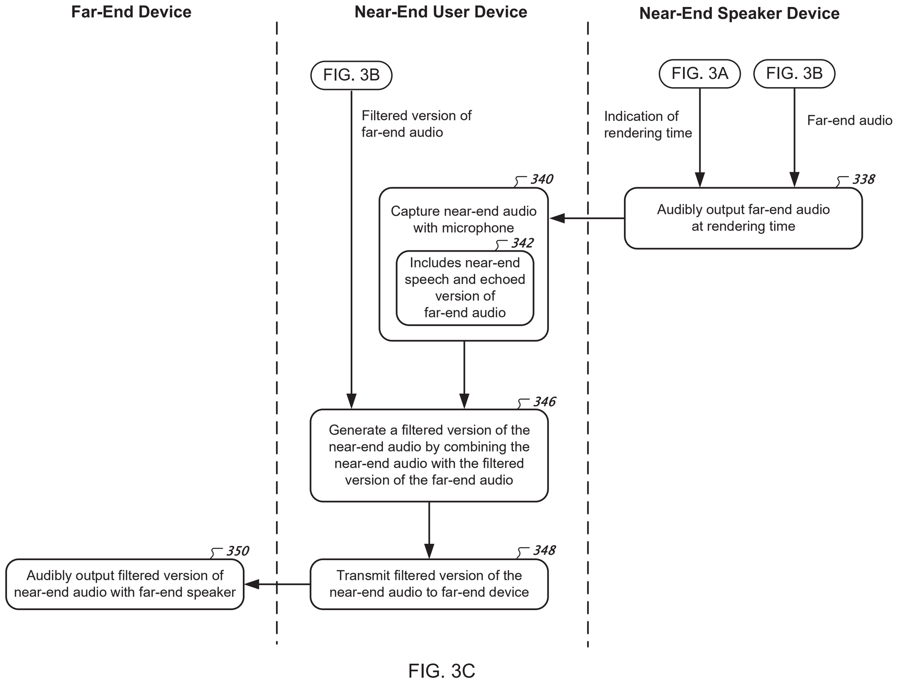

The echo canceller subtracts the filtered version of the far-end audio "y(n)" from the near-end audio signal "d(n)", after aligning the two signals so that the filtered version of the far-end audio will cancel out corresponding echoes of the far-end audio that are captured by the microphone 132 of the near-end user device 120. For example, the signal aligner 210 may align a portion of the near-end audio that was captured at "N" seconds by the microphone 132 with a corresponding portion of audio generated using the model 132 of the echo path that is determined by the near-end user device 120 to have been output at "N" seconds. A difference between these signals may be computed by the echo canceller 130 as the output "e(n)", which is also referred to herein as the "clean" or filtered version of the near-end audio. The signal aligner 210 may use an indication of an audio delay in aligning the signals, as discussed in additional detail below with reference to FIGS. 3A-4.

The near-end user device 120 may send the "clean" filtered version of the near-end audio for receipt by the far-end device 110. The far-end device 110 may receive and audibly output the filtered version of near-end audio, to allow the far-end participant 112 to hear speech by the near-end participant 160.

FIGS. 3A-C show a swim-lane diagram of operations to remove acoustic echoes from an audio conversation. As illustrated by the column headers in FIGS. 3A-C, the operations may be performed the far-end end device 110, the near-end user device 120, and the near-end speaker device 140 that are illustrated in FIG. 1.

Boxes 310 through 318 in FIG. 3A represent operations of a configuration process performed by the audio configurer 126 of the near-end user device 120 and the audio configurer 152 of the near-end speaker device 140. The configuration process can involve the near-end user device 120 specifying, for example, a sample rate of an audio stream, a frame duration, a portion of a frame designated for communication with the near-end speaker device 140 (e.g., rather than other portions designated for communication with other speaker devices), and a presentation delay.

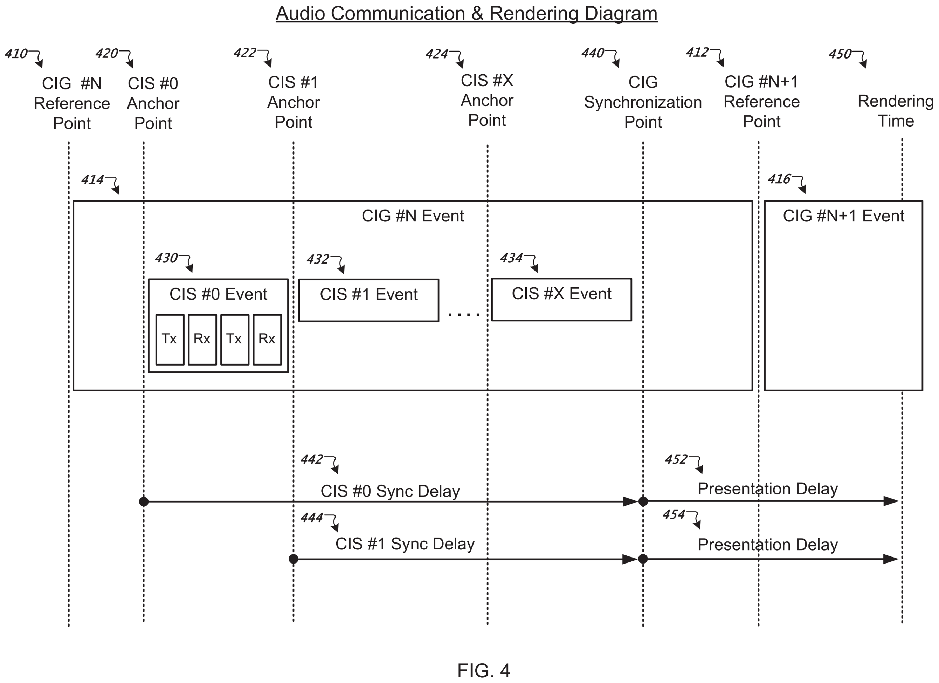

In some examples, the audio communication technology used by the near-end user device 120 and the near-end speaker device 140 is based on Bluetooth Low Energy protocol. FIG. 4 shows a diagram of audio communication and rendering timing between two such devices, to illustrate how parameters specified during the configuration process affect communication between the devices.

In some examples, the communication session may be a Connected Isochronus Stream (CIS) in which the near-end user device 120 serves as the Initiator and the near-end speaker device 140 serves as an Acceptor. The Initiator device may receive audio from a far-end device, and send the audio to an Acceptor device in time bounded transmissions that have a constant interval between them (e.g., an Isochronus Interval). Each frame of audio data transmitted by an Initiator device may begin at a Connected Isochronus Group (CIG) Reference Point (e.g., CIG #N Reference Point 410 in FIG. 4), which may extend a frame duration as illustrated by CIG #N Event 414. The CIG interval regularly repeats, as illustrated by the CIG #N+1 Reference Point 412 and the CIG #N+1 Event 416.

Each CIG interval includes multiple CIS events, for example, one for each Acceptor device that receives an audio stream from the Initiator. Each CIS event may include multiple different slots for transmitting and receiving audio data between an Initiator and Acceptor, as illustrated by the "Tx" and "Rx" boxes in the CIS #0 Event 430.

In some examples, the Initiator device may transmit different audio streams to multiple different Acceptor devices, such as when a user phone transmits audio to a left earpiece and a right earpiece. The Initiator device sends, during a configuration process, information to each Acceptor device indicating their respective CIS event during which they should receive audio data (e.g., CIS #0 for a left earbud and CIS #1 for a right earbud).

The Initiator may also send to each Acceptor device an indication of the sync delay until a CIG synchronization point 440. For example, the Initiator device may send to a first Acceptor device information that indicates a length of the CIS #0 Sync Delay 442, and may send information to a second Acceptor device that indicates a length of the CIS #1 Sync Delay 444. The sync delay sent to each Acceptor device indicates an amount of time that each respective Acceptor device is to delay until a CIG synchronization point 440. The CIG synchronization point 440 may be common to all Acceptor devices involved in the Bluetooth Low Energy communication session.

The CIG synchronization point 440 may represent a point in time at which every Acceptor can guarantee that every other Acceptor has completed its communication with the Initiator device. This point in time is determined by the Initiator and provided to each Acceptor during the configuration process, because the Initiator may be the only device involved in the CIG communication session that knows how many Acceptor devices are involved in the CIG communication.

The Acceptor devices may not be able to render audio at the CIG synchronization point 440, because the audio may still need to be decoded and passed through one or more audio processing algorithms. As a result, the Initiator may send to each Acceptor device an indication of a presentation delay 452, 454, which specifies a rendering time 450 after the Synchronization point at which audio is to be rendered by the Acceptors. Configuring the Acceptor devices to output audio at a same rendering time 450 can be useful in scenarios in which the Acceptor devices are outputting different channels of an audio stream (e.g., left and right channels).

This discussion now returns to the swim-lane diagram of FIGS. 3A-C to discuss how the configuration process of boxes 310 through 318 specify values for various times and time ranges illustrated in FIG. 4.

At box 310, the near-end speaker device 140 sends the near-end user device 130 a range of acceptable values for delay. During the configuration process, for example, the near-end speaker device 140 (serving as an Acceptor) may send the near-end user device 120 (serving as the Initiator) a range of acceptable values for the presentation delay. Every Acceptor device may store values for the minimum and maximum presentation delay that the Acceptor device can support, with the minimum delay representing a shortest time that the Acceptor device can decode and process audio, and the maximum delay representing a longest amount of buffering that the Acceptor device can accommodate.

At box 312, the near-end user device 120 receives the range of acceptable values for the delay and determines a rendering time. The rendering time may be determined as an acceptable presentation delay, and may represent a time that falls between the minimum and maximum of every Acceptor device involved in the CIG stream.

At box 314, the near-end user device 120 sends an indication of the rendering time to the near-end speaker device. In some examples, the indication of the rendering time comprises a value that indicates a delay from a common reference time (box 316). The common reference time may be the above-described synchronization time, or may be another time known to both the near-end user device 120 and the near-end speaker device 140 (e.g., the CIG Reference Point or a CIS Anchor Point). In some examples, the delay includes a combination of the sync delay and the presentation delay, such that the near-end user device 120 sends the near-end speaker device 140 a value for a single delay rather than, for example, sending a first value for the sync delay and a second value for the presentation delay.

At box 318, the near-end speaker device 140 receives and stores the indication of the rendering time for use after completion of the configuration process, for example, during a transmission of audio from the near-end user device 120 to the near-end speaker device 140.

At box 320, the far-end device 110 captures audio with a microphone of the far-end device 110. For example, upon completion of the configuration process and initiation of an audio conversation between the far-end participant 112 and the near-end participant 160 (e.g., telephone call or video conference using devices 110, 120, and 140), the far-end device 110 may use a microphone to capture far-end audio that includes speech by the far-end participant 112.

At box 322, the far-end device 110 transmits the far-end audio to the near-end user device 120. For example, a cell phone held by the far-end participant 112 may transmit a digital version of captured audio over one or more cellular networks for receipt by a cell phone held by the near-end participant 160. The far-end device 110 and the near-end device 160 may be hundreds of kilometers away from each other.

At box 324, the near-end user device 120 receives the far-end audio. For example, the cell phone held by the near-end participant may receive the digital version of the captured audio over the one or more cellular networks. In examples in which the near-end user device 120 is a computer that is hard wired to an Internet connection (e.g., a laptop connected to the Internet with an ethernet cord), the near-end user device 120 may receive the far-end audio over a non-wireless connection.

At box 326, the near-end user device 120 transmits the far-end audio to the near-end speaker device 140. For example, the near-end user device 120 may wirelessly send a copy of the far-end audio received from the far-end device using Bluetooth Low Energy wireless communication technology.

At box 328, the near-end speaker device 140 receives the far-end audio. For example, a Bluetooth speaker device may receive a stream of audio during a CIS event assigned to the speaker device during the configuration process. With reference to FIG. 4, the near-end speaker device 140 may receive the audio data during the CIS #0 event 430.

At box 336, the near-end speaker device 140 synchronizes a local clock 142 with a clock 122 of the near-end user device 120. For example, each transmission that encodes data for a beginning of a CIG reference point (e.g., see point 410 and 412 in FIG. 4) may include a packet that specifies a time (also called a "clock snapshot") of the near-end user device clock 112 at transmission. In some examples, the near-end speaker device 140 designates a beginning of the transmission as an "Instant" for an asynchronous connection-oriented logical transport (ACL) link that supports communications of the corresponding CIG Event.

The clock synchronizer 144 of the near-end speaker device 140 may use the clock snapshot to generate a synchronized clock signal. In some examples, generating the synchronized clock signal involves adjusting the speaker device clock 142 (e.g., adjusting a clock register). In some examples, generating the synchronized clock involves determining an offset between the clock 122 of the near-end user device 120 and the clock 142 of the near-end speaker device 140, and utilizing the offset to identify moments counted by the speaker device clock 142 that correspond to moments specified with respect a time of the user device clock 122.

At box 338, the near-end speaker device 140 audibly outputs the far-end audio at the rendering time. As an example with reference to FIG. 4, after the near-end speaker device 140 receives audio during the CIS #0 event, the near-end speaker device 140 may wait an amount of time specified by the CIS #0 Sync Delay until the CIG synchronization point 440 is reached, and then wait an amount of time specified by the presentation delay 452 until the rendering time 450. At the rendering time 450, the audio renderer 154 of the near-end speaker device causes the speaker 156 to generate an acoustic representation of the far-end audio.

At box 340, the near-end user device 120 captures near-end audio with the microphone 134. For example, the near-end user device 120 may capture any audio in the near-end environment, which may include simultaneous near-end speech by the near-end participant 160 and an echoed version of the far-end audio generated by the speaker 156 (box 342). Stated another way, should the near-end participant 160 and the far-end participant 112 talk at the same time, the near-end participant's phone may capture a mix of both users speaking.

Returning to box 330, after the near-end user device 120 receives the far-end audio, the near-end user device 120 not only transmits the far-end audio to the near-end speaker device (as discussed above with respect to box 326), but the near-end user device 120 also uses a copy of the far-end audio to estimate the echoed version of the far-end audio that will be present in the audio that will soon be captured by the microphone 134 of the near-end user device 120.

Still discussing box 330, the near-end user device 120 modifies the far-end audio to generate a filtered version of the far-end audio. The modification may include combining the copy of the far-end audio with the model 132 of the echo path from the near-end user device 120 to the near-end speaker device 140 (e.g., using convolution to apply the adaptive filter of model 132 to the far-end audio).

At box 334, the near-end user device 120 aligns the filtered version of the far-end audio with the near-end audio, using the indication of the rendering time. The near-end user device 120 may receive an ongoing stream of the far-end audio from the far-end device 110, and regularly (i) send portions of the far-end audio in discrete bursts of data to the near-end speaker device 140, and (ii) generate filtered versions of portions of the far-end audio that estimate the far-end audio components embedded within the near-end audio. To ensure that the estimated far-end echoes cancel out actual corresponding echoes from the near-end audio, the signals may be aligned using the signal aligner 210 of FIG. 2.

In some examples, the near-end user device 120 identifies times at which various portions of the far-end audio will be output by the near-end speaker device 140, based on times of transmission of the portions of the far-end audio to the speaker device 140 and the sync and presentation delays imposed until the portions of the far-end audio are rendered by the near-end speaker device (e.g., adding both delays to a time of transmission). The near-end user device may assign the determined rendering times for the portions of the far-end audio to the copy of the far-end audio that is retained at the near-end user device 120 and to which the model 132 of the acoustic path is applied. This timing information may be carried through to the filtered version of the far-end audio, such that the near-end user device 120 stores various rendering times or indications thereof in association with various portions of the filtered far-end audio, to facilitate alignment of this stored audio data with corresponding times assigned to the near-end audio (e.g., based on times of capture of the near-end audio by the microphone 134). Stated another way, the near-end user device 120 can use the delay data to determine how to align the estimate of far-end audio with the captured audio, so that the estimated far-end audio is subtracted from the appropriate portion of captured audio.

At box 346, the near-end user device 120 generates a "clean" filtered version of the near-end audio by combining the near-end audio with the filtered version of the far-end audio. With reference to FIG. 4, the combining element 240 may remove the aligned and filtered version of the far-end audio from the near-end audio, to generate the error "e(n)" between the signals. The error signal may represent only near-end speech and near-end environmental sounds in an ideal implementation.

At box 348, the near-end user device 120 transmits the "clean" filtered version of the near-end audio to the far-end device. For example, the near-end user device 120 may transmit over the Internet a digital representation of the near-end audio that has been processed to remove echoed components of the far-end audio.

At box 350, the far-end device 110 receives and audibly outputs the filtered version of the near-end audio. For example, a speaker of the far-end device 110 may produce an acoustic version of the "clean" filtered version of the near-end audio.

The system of devices 110, 120, and 140 may repeat the operations of boxes 320 through 350 throughout a conversation between participants 112 and 160, for different portions of audio. These boxes therefore represent operations that continue as long as audio streams among the device 110, 120, and 140, and may represent a loop of operations that repeat for each portion of audio or which are applied to each portion of audio.

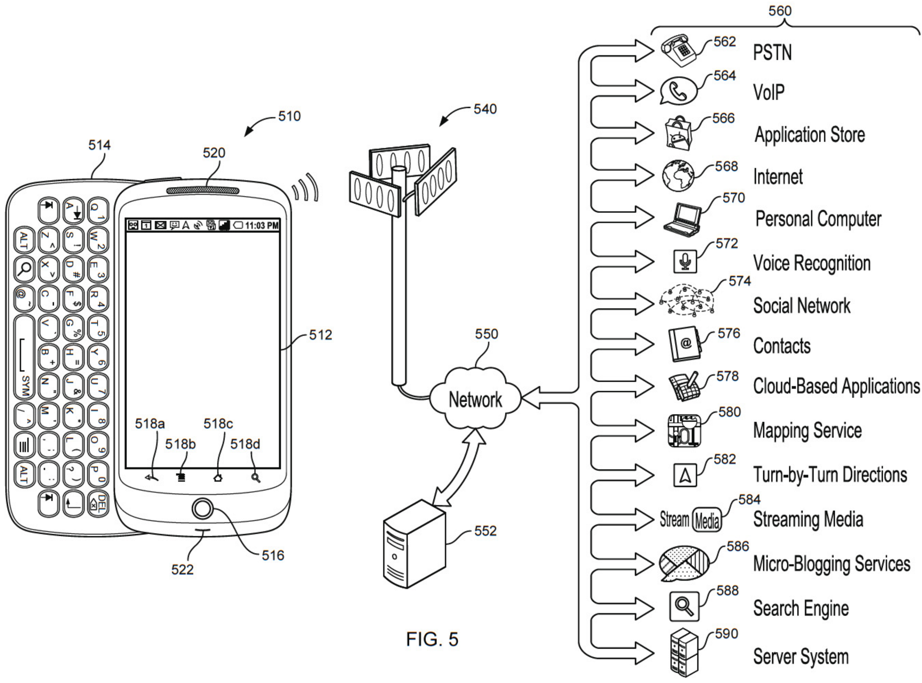

Referring now to FIG. 5, a conceptual diagram of a system that may be used to implement the systems and methods described in this document is illustrated. In the system, mobile computing device 510 can wirelessly communicate with base station 540, which can provide the mobile computing device wireless access to numerous hosted services 560 through a network 550.

In this illustration, the mobile computing device 510 is depicted as a handheld mobile telephone (e.g., a smartphone, or an application telephone) that includes a touchscreen display device 512 for presenting content to a user of the mobile computing device 510 and receiving touch-based user inputs and/or presence-sensitive user input (e.g., as detected over a surface of the computing device using radar detectors mounted in the mobile computing device 510). Other visual, tactile, and auditory output components may also be provided (e.g., LED lights, a vibrating mechanism for tactile output, or a speaker for providing tonal, voice-generated, or recorded output), as may various different input components (e.g., keyboard 514, physical buttons, trackballs, accelerometers, gyroscopes, and magnetometers).

Example visual output mechanism in the form of display device 512 may take the form of a display with resistive or capacitive touch capabilities. The display device may be for displaying video, graphics, images, and text, and for coordinating user touch input locations with the location of displayed information so that the device 510 can associate user contact at a location of a displayed item with the item. The mobile computing device 510 may also take alternative forms, including as a laptop computer, a tablet or slate computer, a personal digital assistant, an embedded system (e.g., a car navigation system), a desktop personal computer, or a computerized workstation.

An example mechanism for receiving user-input includes keyboard 514, which may be a full qwerty keyboard or a traditional keypad that includes keys for the digits '0-9', '*', and '#.' The keyboard 514 receives input when a user physically contacts or depresses a keyboard key. User manipulation of a trackball 516 or interaction with a track pad enables the user to supply directional and rate of movement information to the mobile computing device 510 (e.g., to manipulate a position of a cursor on the display device 512).

The mobile computing device 510 may be able to determine a position of physical contact with the touchscreen display device 512 (e.g., a position of contact by a finger or a stylus). Using the touchscreen 512, various "virtual" input mechanisms may be produced, where a user interacts with a graphical user interface element depicted on the touchscreen 512 by contacting the graphical user interface element. An example of a "virtual" input mechanism is a "software keyboard," where a keyboard is displayed on the touchscreen and a user selects keys by pressing a region of the touchscreen 512 that corresponds to each key.

The mobile computing device 510 may include mechanical or touch sensitive buttons 518a-d. Additionally, the mobile computing device may include buttons for adjusting volume output by the one or more speakers 520, and a button for turning the mobile computing device on or off. A microphone 522 allows the mobile computing device 510 to convert audible sounds into an electrical signal that may be digitally encoded and stored in computer-readable memory, or transmitted to another computing device. The mobile computing device 510 may also include a digital compass, an accelerometer, proximity sensors, and ambient light sensors.

An operating system may provide an interface between the mobile computing device's hardware (e.g., the input/output mechanisms and a processor executing instructions retrieved from computer-readable medium) and software. Example operating systems include ANDROID, CHROME, IOS, MAC OS X, WINDOWS 7, WINDOWS PHONE 7, SYMBIAN, BLACKBERRY, WEBOS,, a variety of UNIX operating systems; or a proprietary operating system for computerized devices. The operating system may provide a platform for the execution of application programs that facilitate interaction between the computing device and a user.

The mobile computing device 510 may present a graphical user interface with the touchscreen 512. A graphical user interface is a collection of one or more graphical interface elements and may be static (e.g., the display appears to remain the same over a period of time), or may be dynamic (e.g., the graphical user interface includes graphical interface elements that animate without user input).

A graphical interface element may be text, lines, shapes, images, or combinations thereof. For example, a graphical interface element may be an icon that is displayed on the desktop and the icon's associated text. In some examples, a graphical interface element is selectable with user-input. For example, a user may select a graphical interface element by pressing a region of the touchscreen that corresponds to a display of the graphical interface element. In some examples, the user may manipulate a trackball to highlight a single graphical interface element as having focus. User-selection of a graphical interface element may invoke a pre-defined action by the mobile computing device. In some examples, selectable graphical interface elements further or alternatively correspond to a button on the keyboard 514. User-selection of the button may invoke the pre-defined action.

In some examples, the operating system provides a "desktop" graphical user interface that is displayed after turning on the mobile computing device 510, after activating the mobile computing device 510 from a sleep state, after "unlocking" the mobile computing device 510, or after receiving user-selection of the "home" button 518c. The desktop graphical user interface may display several graphical interface elements that, when selected, invoke corresponding application programs. An invoked application program may present a graphical interface that replaces the desktop graphical user interface until the application program terminates or is hidden from view.

User-input may influence an executing sequence of mobile computing device 510 operations. For example, a single-action user input (e.g., a single tap of the touchscreen, swipe across the touchscreen, contact with a button, or combination of these occurring at a same time) may invoke an operation that changes a display of the user interface. Without the user-input, the user interface may not have changed at a particular time. For example, a multi-touch user input with the touchscreen 512 may invoke a mapping application to "zoom-in" on a location, even though the mapping application may have by default zoomed-in after several seconds.

The desktop graphical interface can also display "widgets." A widget is one or more graphical interface elements that are associated with an application program that is executing, and that display on the desktop content controlled by the executing application program. A widget's application program may launch as the mobile device turns on. Further, a widget may not take focus of the full display. Instead, a widget may only "own" a small portion of the desktop, displaying content and receiving touchscreen user-input within the portion of the desktop.

The mobile computing device 510 may include one or more location-identification mechanisms. A location-identification mechanism may include a collection of hardware and software that provides the operating system and application programs an estimate of the mobile device's geographical position. A location-identification mechanism may employ satellite-based positioning techniques, base station transmitting antenna identification, multiple base station triangulation, internet access point IP location determinations, inferential identification of a user's position based on search engine queries, and user-supplied identification of location (e.g., by receiving user a "check in" to a location).

The mobile computing device 510 may include other applications, computing sub-systems, and hardware. A call handling unit may receive an indication of an incoming telephone call and provide a user the capability to answer the incoming telephone call. A media player may allow a user to listen to music or play movies that are stored in local memory of the mobile computing device 510. The mobile computing device 510 may include a digital camera sensor, and corresponding image and video capture and editing software. An internet browser may enable the user to view content from a web page by typing in an addresses corresponding to the web page or selecting a link to the web page.

The mobile computing device 510 may include an antenna to wirelessly communicate information with the base station 540. The base station 540 may be one of many base stations in a collection of base stations (e.g., a mobile telephone cellular network) that enables the mobile computing device 510 to maintain communication with a network 550 as the mobile computing device is geographically moved. The computing device 510 may alternatively or additionally communicate with the network 550 through a Wi-Fi router or a wired connection (e.g., ETHERNET, USB, or FIREWIRE). The computing device 510 may also wirelessly communicate with other computing devices using BLUETOOTH protocols, or may employ an ad-hoc wireless network.

A service provider that operates the network of base stations may connect the mobile computing device 510 to the network 550 to enable communication between the mobile computing device 510 and other computing systems that provide services 560. Although the services 560 may be provided over different networks (e.g., the service provider's internal network, the Public Switched Telephone Network, and the Internet), network 550 is illustrated as a single network. The service provider may operate a server system 552 that routes information packets and voice data between the mobile computing device 510 and computing systems associated with the services 560.

The network 550 may connect the mobile computing device 510 to the Public Switched Telephone Network (PSTN) 562 in order to establish voice or fax communication between the mobile computing device 510 and another computing device. For example, the service provider server system 552 may receive an indication from the PSTN 562 of an incoming call for the mobile computing device 510. Conversely, the mobile computing device 510 may send a communication to the service provider server system 552 initiating a telephone call using a telephone number that is associated with a device accessible through the PSTN 562.

The network 550 may connect the mobile computing device 510 with a Voice over Internet Protocol (VoIP) service 564 that routes voice communications over an IP network, as opposed to the PSTN. For example, a user of the mobile computing device 510 may invoke a VoIP application and initiate a call using the program. The service provider server system 552 may forward voice data from the call to a VoIP service, which may route the call over the internet to a corresponding computing device, potentially using the PSTN for a final leg of the connection.

An application store 566 may provide a user of the mobile computing device 510 the ability to browse a list of remotely stored application programs that the user may download over the network 550 and install on the mobile computing device 510. The application store 566 may serve as a repository of applications developed by third-party application developers. An application program that is installed on the mobile computing device 510 may be able to communicate over the network 550 with server systems that are designated for the application program. For example, a VoIP application program may be downloaded from the Application Store 566, enabling the user to communicate with the VolP service 564.

The mobile computing device 510 may access content on the internet 568 through network 550. For example, a user of the mobile computing device 510 may invoke a web browser application that requests data from remote computing devices that are accessible at designated universal resource locations. In various examples, some of the services 560 are accessible over the internet.

The mobile computing device may communicate with a personal computer 570. For example, the personal computer 570 may be the home computer for a user of the mobile computing device 510. Thus, the user may be able to stream media from his personal computer 570. The user may also view the file structure of his personal computer 570, and transmit selected documents between the computerized devices.

A voice recognition service 572 may receive voice communication data recorded with the mobile computing device's microphone 522, and translate the voice communication into corresponding textual data. In some examples, the translated text is provided to a search engine as a web query, and responsive search engine search results are transmitted to the mobile computing device 510.

The mobile computing device 510 may communicate with a social network 574. The social network may include numerous members, some of which have agreed to be related as acquaintances. Application programs on the mobile computing device 510 may access the social network 574 to retrieve information based on the acquaintances of the user of the mobile computing device. For example, an "address book" application program may retrieve telephone numbers for the user's acquaintances. In various examples, content may be delivered to the mobile computing device 510 based on social network distances from the user to other members in a social network graph of members and connecting relationships. For example, advertisement and news article content may be selected for the user based on a level of interaction with such content by members that are "close" to the user (e.g., members that are "friends" or "friends of friends").

The mobile computing device 510 may access a personal set of contacts 576 through network 550. Each contact may identify an individual and include information about that individual (e.g., a phone number, an email address, and a birthday). Because the set of contacts is hosted remotely to the mobile computing device 510, the user may access and maintain the contacts 576 across several devices as a common set of contacts.

The mobile computing device 510 may access cloud-based application programs 578. Cloud-computing provides application programs (e.g., a word processor or an email program) that are hosted remotely from the mobile computing device 510, and may be accessed by the device 510 using a web browser or a dedicated program. Example cloud-based application programs include GOOGLE DOCS word processor and spreadsheet service, GOOGLE GMAIL webmail service, and PICASA picture manager.

Mapping service 580 can provide the mobile computing device 510 with street maps, route planning information, and satellite images. An example mapping service is GOOGLE MAPS. The mapping service 580 may also receive queries and return location-specific results. For example, the mobile computing device 510 may send an estimated location of the mobile computing device and a user-entered query for "pizza places" to the mapping service 580. The mapping service 580 may return a street map with "markers" superimposed on the map that identify geographical locations of nearby "pizza places."

Turn-by-turn service 582 may provide the mobile computing device 510 with turn-by-turn directions to a user-supplied destination. For example, the turn-by-turn service 582 may stream to device 510 a street-level view of an estimated location of the device, along with data for providing audio commands and superimposing arrows that direct a user of the device 510 to the destination.

Various forms of streaming media 584 may be requested by the mobile computing device 510. For example, computing device 510 may request a stream for a pre-recorded video file, a live television program, or a live radio program. Example services that provide streaming media include YOUTUBE and PANDORA.

A micro-blogging service 586 may receive from the mobile computing device 510 a user-input post that does not identify recipients of the post. The micro-blogging service 586 may disseminate the post to other members of the micro-blogging service 586 that agreed to subscribe to the user.

A search engine 588 may receive user-entered textual or verbal queries from the mobile computing device 510, determine a set of internet-accessible documents that are responsive to the query, and provide to the device 510 information to display a list of search results for the responsive documents. In examples where a verbal query is received, the voice recognition service 572 may translate the received audio into a textual query that is sent to the search engine.

These and other services may be implemented in a server system 590. A server system may be a combination of hardware and software that provides a service or a set of services. For example, a set of physically separate and networked computerized devices may operate together as a logical server system unit to handle the operations necessary to offer a service to hundreds of computing devices. A server system is also referred to herein as a computing system.

In various implementations, operations that are performed "in response to" or "as a consequence of" another operation (e.g., a determination or an identification) are not performed if the prior operation is unsuccessful (e.g., if the determination was not performed). Operations that are performed "automatically" are operations that are performed without user intervention (e.g., intervening user input). Features in this document that are described with conditional language may describe implementations that are optional. In some examples, "transmitting" from a first device to a second device includes the first device placing data into a network for receipt by the second device, but may not include the second device receiving the data. Conversely, "receiving" from a first device may include receiving the data from a network, but may not include the first device transmitting the data.

"Determining" by a computing system can include the computing system requesting that another device perform the determination and supply the results to the computing system. Moreover, "displaying" or "presenting" by a computing system can include the computing system sending data for causing another device to display or present the referenced information.

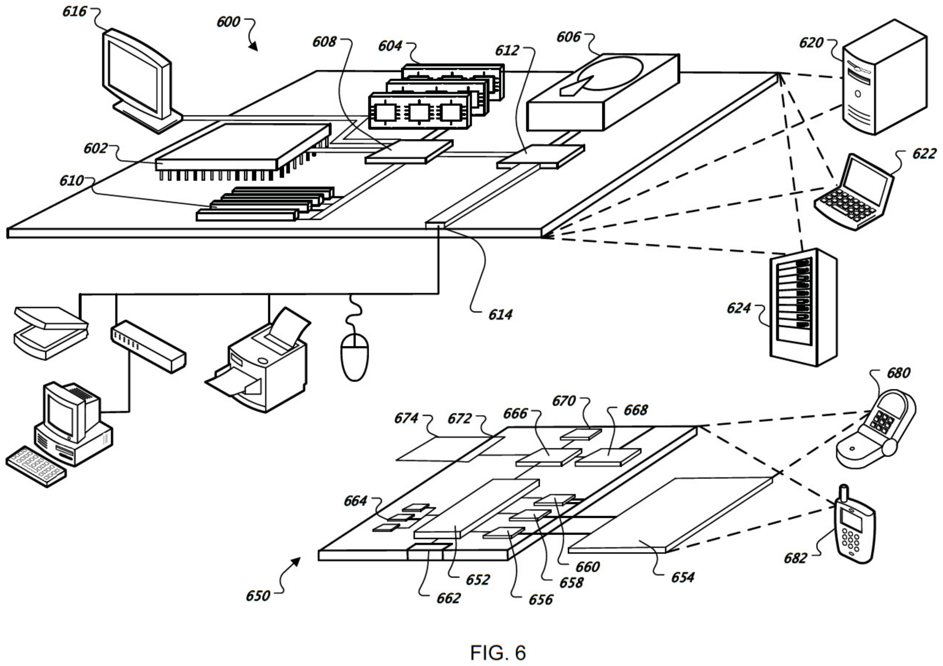

FIG. 6 is a block diagram of computing devices 600, 650 that may be used to implement the systems and methods described in this document, as either a client or as a server or plurality of servers. Computing device 600 is intended to represent various forms of digital computers, such as laptops, desktops, workstations, personal digital assistants, servers, blade servers, mainframes, and other appropriate computers. Computing device 650 is intended to represent various forms of mobile devices, such as personal digital assistants, cellular telephones, smartphones, and other similar computing devices. The components shown here, their connections and relationships, and their functions, are meant to be examples only, and are not meant to limit implementations described and/or claimed in this document.

Computing device 600 includes a processor 602, memory 604, a storage device 606, a high-speed controller 608 connecting to memory 604 and high-speed expansion ports 610, and a low speed controller 612 connecting to low speed expansion port 614 and storage device 606. Each of the components 602, 604, 606, 608, 610, and 612, are interconnected using various busses, and may be mounted on a common motherboard or in other manners as appropriate. The processor 602 can process instructions for execution within the computing device 600, including instructions stored in the memory 604 or on the storage device 606 to display graphical information for a GUI on an external input/output device, such as display 616 coupled to high-speed controller 608. In other implementations, multiple processors and/or multiple buses may be used, as appropriate, along with multiple memories and types of memory. Also, multiple computing devices 600 may be connected, with each device providing portions of the necessary operations (e.g., as a server bank, a group of blade servers, or a multi-processor system).

The memory 604 stores information within the computing device 600. In one implementation, the memory 604 is a volatile memory unit or units. In another implementation, the memory 604 is a non-volatile memory unit or units. The memory 604 may also be another form of computer-readable medium, such as a magnetic or optical disk.

The storage device 606 is capable of providing mass storage for the computing device 600. In one implementation, the storage device 606 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 604, the storage device 606, or memory on processor 602.

The high-speed controller 608 manages bandwidth-intensive operations for the computing device 600, while the low speed controller 612 manages lower bandwidth-intensive operations. Such allocation of functions is an example only. In one implementation, the high-speed controller 608 is coupled to memory 604, display 616 (e.g., through a graphics processor or accelerator), and to high-speed expansion ports 610, which may accept various expansion cards (not shown). In the implementation, low-speed controller 612 is coupled to storage device 606 and low-speed expansion port 614. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 600 may be implemented in a number of different forms, as shown in the figure. For example, it may be implemented as a standard server 620, or multiple times in a group of such servers. It may also be implemented as part of a rack server system 624. In addition, it may be implemented in a personal computer such as a laptop computer 622. Alternatively, components from computing device 600 may be combined with other components in a mobile device (not shown), such as device 650. Each of such devices may contain one or more of computing device 600, 650, and an entire system may be made up of multiple computing devices 600, 650 communicating with each other.

Computing device 650 includes a processor 652, memory 664, an input/output device such as a display 654, a communication interface 666, and a transceiver 668, among other components. The device 650 may also be provided with a storage device, such as a microdrive or other device, to provide additional storage. Each of the components 650, 652, 664, 654, 666, and 668, are interconnected using various buses, and several of the components may be mounted on a common motherboard or in other manners as appropriate.

The processor 652 can execute instructions within the computing device 650, including instructions stored in the memory 664. The processor may be implemented as a chipset of chips that include separate and multiple analog and digital processors. Additionally, the processor may be implemented using any of a number of architectures. For example, the processor may be a CISC (Complex Instruction Set Computers) processor, a RISC (Reduced Instruction Set Computer) processor, or a MISC (Minimal Instruction Set Computer) processor. The processor may provide, for example, for coordination of the other components of the device 650, such as control of user interfaces, applications run by device 650, and wireless communication by device 650.

Processor 652 may communicate with a user through control interface 658 and display interface 656 coupled to a display 654. The display 654 may be, for example, a TFT (Thin-Film-Transistor Liquid Crystal Display) display or an OLED (Organic Light Emitting Diode) display, or other appropriate display technology. The display interface 656 may comprise appropriate circuitry for driving the display 654 to present graphical and other information to a user. The control interface 658 may receive commands from a user and convert them for submission to the processor 652. In addition, an external interface 662 may be provide in communication with processor 652, so as to enable near area communication of device 650 with other devices. External interface 662 may provided, for example, for wired communication in some implementations, or for wireless communication in other implementations, and multiple interfaces may also be used.

The memory 664 stores information within the computing device 650. The memory 664 can be implemented as one or more of a computer-readable medium or media, a volatile memory unit or units, or a non-volatile memory unit or units. Expansion memory 674 may also be provided and connected to device 650 through expansion interface 672, which may include, for example, a SIMM (Single In Line Memory Module) card interface. Such expansion memory 674 may provide extra storage space for device 650, or may also store applications or other information for device 650. Specifically, expansion memory 674 may include instructions to carry out or supplement the processes described above, and may include secure information also. Thus, for example, expansion memory 674 may be provide as a security module for device 650, and may be programmed with instructions that permit secure use of device 650. In addition, secure applications may be provided via the SIMM cards, along with additional information, such as placing identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 664, expansion memory 674, or memory on processor 652 that may be received, for example, over transceiver 668 or external interface 662.

Device 650 may communicate wirelessly through communication interface 666, which may include digital signal processing circuitry where necessary. Communication interface 666 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 668. In addition, short-range communication may occur, such as using a Bluetooth, WiFi, or other such transceiver (not shown). In addition, GPS (Global Positioning System) receiver module 670 may provide additional navigation- and location-related wireless data to device 650, which may be used as appropriate by applications running on device 650.

Device 650 may also communicate audibly using audio codec 660, which may receive spoken information from a user and convert it to usable digital information. Audio codec 660 may likewise generate audible sound for a user, such as through a speaker, e.g., in a handset of device 650. Such sound may include sound from voice telephone calls, may include recorded sound (e.g., voice messages, music files, etc.) and may also include sound generated by applications operating on device 650.

The computing device 650 may be implemented in a number of different forms, as shown in the figure. For example, it may be implemented as a cellular telephone 680. It may also be implemented as part of a smartphone 682, personal digital assistant, or other similar mobile device.

Additionally computing device 600 or 650 can include Universal Serial Bus (USB) flash drives. The USB flash drives may store operating systems and other applications. The USB flash drives can include input/output components, such as a wireless transmitter or USB connector that may be inserted into a USB port of another computing device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), peer-to-peer networks (having ad-hoc or static members), grid computing infrastructures, and the Internet.

The computing system can include clients and servers. A client and server are generally remote from each other and typically interact through a communication network. The relationship of client and server arises by virtue of computer programs running on the respective computers and having a client-server relationship to each other.

Although a few implementations have been described in detail above, other modifications are possible. Moreover, other mechanisms for performing the systems and methods described in this document may be used. In addition, the logic flows depicted in the figures do not require the particular order shown, or sequential order, to achieve desirable results. Other steps may be provided, or steps may be eliminated, from the described flows, and other components may be added to, or removed from, the described systems. Accordingly, other implementations are within the scope of the following claims.

## Claims

1. A computer-implemented method for acoustic echo cancellation, comprising:
receiving, by a near-end user device and from a far-end device, far-end audio;
wirelessly transmitting, by the near-end user device and for receipt by a near-end speaker device that is physically separate from the near-end user device, the far-end audio for audible output by a speaker of the near-end speaker device;
transmitting, by the near-end user device and for receipt by the near-end speaker device, an indication of a time at which the near-end speaker device is to audibly output the far-end audio;
capturing, by a microphone of the near-end user device, near-end audio that includes near-end user speech and an echoed version of the far-end audio that was audibly output by the speaker of the near-end speaker device;
modifying, by the near-end user device, the far-end audio to generate a filtered version of the far-end audio, using:
(i) a model of an acoustic echo path between the near-end speaker device and the near-end user device; and
(ii) the indication of the time at which the near-end speaker device is to audibly output the far-end audio;
combining, by the near-end user device, the near-end audio captured by the microphone of the near-end user device with the filtered version of the far-end audio, to generate a filtered version of the near-end audio; and
transmitting, by the near-end user device and for receipt by the far-end device, the filtered version of the near-end audio.

2. The computer-implemented method of claim 1, wherein:
the indication of the time at which the near-end speaker device is to audibly output the far-end audio comprises an indication of a time delay.

3. The computer-implemented method of claim 2, wherein:
the indication of the time delay comprises a delay that the near-end speaker device is to impose from (i) a common reference time recognized by each of the near-end user device and the near-end speaker device; and (ii) the time at which the near-end speaker device is to audibly output the far-end audio.

4. The computer-implemented method of claim 3, wherein:
the indication of the time delay comprises (i) an indication of a first time delay from the common reference time to a synchronization time, and (ii) an indication of a second time delay from the synchronization time to the time at which the near-end speaker device is to audibly output the far-end audio.

5. The computer-implemented method of claim 4, comprising:
receiving, by the near-end user device and from the near-end speaker device, an indication of a range of acceptable values for the second time delay from the synchronization time to the time at which the near-end speaker device is to audibly output the far-end audio; and
determining, by the near-end user device, the second time delay from among the range of acceptable values for the second time delay.

6. The computer-implemented method of any one of claims 3 to 5, wherein:
the common reference time comprises a time at which the near-end user device begins wirelessly transmitting data that encodes the far-end audio and optionally:
wherein the common reference time comprises an anchor point of a Bluetooth Low Energy communication session.

7. The computer-implemented method of any preceding claim, wherein modifying the far-end audio to generate the filtered version of the far-end audio comprises:
aligning the far-end audio with the model of the acoustic echo path between the near-end speaker device and the near-end user device, using the indication of the time at which the near-end speaker device is to audibly output the far-end audio.

8. The computer-implemented method of any preceding claim, wherein combining the near-end audio with the filtered version of the far-end audio to generate the filtered version of the near-end audio comprises:
aligning the filtered version of the far-end audio with the near-end audio captured by the microphone of the near-end user device.

9. The computer-implemented method of any preceding claim, wherein the model of the acoustic echo path comprises an adaptive filter.

10. The computer-implemented method of any preceding claim, wherein combining the near-end audio with the filtered version of the far-end audio to generate the filtered version of the near-end audio comprises:
subtracting the filtered version of the far-end audio from the near-end audio.

11. The computer-implemented method of any preceding claim, wherein the time at which the near-end speaker device is to audibly output the far-end audio comprises a starting time at which the near-end speaker device is to begin audibly outputting the far-end audio.

12. The computer-implemented method of any preceding claim, wherein:
the far-end audio that is received by the near-end user device comprises a digitally-encoded representation of the far-end audio; and
the filtered version of the near-end audio that is transmitted for receipt by the far-end device comprises a digitally-encoded representation of the filtered version of the near-end audio.

13. The computer-implemented method of any preceding claim, wherein the near-end user device transmits the indication of the time at which the near-end speaker device is to audibly output the far-end audio during a configuration process, before the near-end user device wirelessly transmitting the far-end audio for receipt by the near-end speaker device.

14. The computer-implemented method of any preceding claim, wherein the far-end audio was captured by a microphone of the far-end device.

15. A near-end user device, comprising:
one or more processing devices; and
one or more computer-readable devices encoding instructions that, when executed by the one or more processing devices, causes the near-end user device to perform operations that comprise:
receiving, by a near-end user device and from a far-end device, far-end audio;
wirelessly transmitting, by the near-end user device and for receipt by a near-end speaker device that is physically separate from the near-end user device, the far-end audio for audible output by a speaker of the near-end speaker device;
transmitting, by the near-end user device and for receipt by the near-end speaker device, an indication of a time at which the near-end speaker device is to audibly output the far-end audio;
capturing, by a microphone of the near-end user device, near-end audio that includes near-end user speech and an echoed version of the far-end audio that was audibly output by the speaker of the near-end speaker device;
modifying, by the near-end user device, the far-end audio to generate a filtered version of the far-end audio, using:
(i) a model of an acoustic echo path between the near-end speaker device and the near-end user device; and
(ii) the indication of the time at which the near-end speaker device is to audibly output the far-end audio;
combining, by the near-end user device, the near-end audio captured by the microphone of the near-end user device with the filtered version of the far-end audio, to generate a filtered version of the near-end audio; and
transmitting, by the near-end user device and for receipt by the far-end device, the filtered version of the near-end audio.
